Europäisches Patentamt

European Patent Office

Office européen des brevets

(19)

(11) EP 1 477 071 A1

(12) **EUROPEAN PATENT APPLICATION**
published in accordance with Art. 158(3) EPC

(43) Date of publication:
**17.11.2004 Bulletin 2004/47**

(21) Application number: **03701827.2**

(22) Date of filing: **21.01.2003**

(51) Int Cl.[7]: **A23G 1/00**, A23G 3/00

(86) International application number:
**PCT/JP2003/000481**

(87) International publication number:
**WO 2003/063602 (07.08.2003 Gazette 2003/32)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **30.01.2002 JP 2002020958**

(71) Applicant: **Meiji Seika Kaisha, Ltd.
Tokyo 104-8002 (JP)**

(72) Inventors:
• **HIGAKI, K.,
Food Research and Development Labs.
Sakado-shi, Saitama 350-0214 (JP)**

• **SASAKURA, Y.,
Food Research and Development Labs.
Sakado-shi, Saitama 350-0214 (JP)**
• **HACHIYA, I.,
Food Research and Development Labs.
Sakado-shi, Saitama 350-0214 (JP)**

(74) Representative: **VOSSIUS & PARTNER
Siebertstrasse 4
81675 München (DE)**

(54) **OILY CAKE EXCELLENT IN HEAT-RESISTANT SHAPE RETENTION AND PROCESS FOR PRODUCING THE SAME**

(57) An fat-based confectionery which is excellent in meltability in the mouth and heat-resistant shape retention can be provided by a production method characterized by including steps of adding to a fat-based confectionery material a high melting point triglycerides in an amount of 1.2 to 1.8% by weight based on the fat contained in the confectionery material, completely melting the resultant mixture by heating, then cooling it to thereby convert all of the crystalline forms of the high melting point triglycerides into forms other than stable ones, and then heating it to thereby convert all of the high melting point triglycerides crystals into stable ones.

**Description**

**TECHNICAL FIELD**

The present invention relates to fat-based confectionery which is good in mouth meltability and excellent in heat-resistant shape retention even by addition of high melting point triglycerides, and a process for producing the same.

**BACKGROUND ART**

Recent fat-based confectionery such as chocolates has been diversified, for example, ordinary slab formation, injection in edible products such as snack confections and coating on edible stuffs such as crackers to comply with the change in consumers' life style. Since melting in the mouth at the time of eating is one of the important qualities in fat-based confectionery, heat-resistant shape retention is required of the fat-based confectionery.

As a method to cope with this problem, it is a general practice to add high melting point triglycerides to fat-based confectionery material. For example, in case of tempered-type fat-based confectionery, the heat-resistant shape retention of the fat-based confectionery is improved by incorporating 1,3-distearoyl-2-oleoyl-sn-glycerol (SOS) in the total oils and fats in an amount of approximately 10% by weight as high melting point triglycerides (Oil Chemistry), 42, 453 (1993)). Further, in case of non-tempered-type fat-based confectionery, the heat-resistant shape retention of the fat-based confectionery is improved by incorporating high melting point non-tempered-type oils and fats which are hardened by hydrogenation in oils and fats in an amount of approximately 10% by weight. However, the fat-based confectionery containing large quantities of high melting point triglycerides are remarkably decreased in mouth meltability because of the increase in melting point of the fat-based confectionery themselves, and extremely decrease consumers' fondness.

JP-A-2-286041 discloses a technique that the heat-resistant shape retention of fat-based confectionery is maintained by incorporating from 5 to 70% by weight of symmetrical triglyceride having saturated fatty acids in the 1-position and 3-position of triglyceride and linoleic acid in the 2-position (SLS S: saturated fatty acid, L: linoleic acid) into the chocolate oil. Nevertheless, this method involves a defect that since air oxidation of the triglyceride containing the polyvalent unsaturated fatty acid (linoleic acid) heavily proceeds, deterioration of a taste is accelerated and an actual commercial product cannot be provided.

WO 00/57715 discloses a technique of obtaining aerated fat-based confectionery material in a relatively high temperature region upon using high melting point oils and fats, namely crystals of high melting point triglycerides. First, an oil mixture obtained by properly mixing edible oils and fats with a triglyceride containing behenic acid is completely melted, and cooled to a temperature of from 30 to 45°C to precipitate crystals of the triglyceride. While a fat-based confectionery material is tempered in a usual manner, the oils and fats having crystals of the triglyceride which have been formed in advance are added to the fat-based confectionery material such that the amount of the oils and fats finally reaches from 0.5 to 2.0% by weight, and the mixture is stirred for aerating to obtain aerated fat-based confectionery having a fluidity. This technique separately requires a crystallization treatment of the oils and fats containing high melting point oils and fats to make the process intricate. Further, crystals precipitated by the crystallization treatment of the high melting point oils and fats have crystal polymorphic forms, α-, β'- and β-forms, and the crystals of the respective forms are different in melting point and amount of dissolution in liquid fats. Thus, stable qualities cannot be obtained in view of an aerating ratio and a viscosity.

Under these circumstances, a process for producing, through a lesser number of steps in stable qualities, fat-based confectionery which are good in mouth meltability and excellent in heat-resistant shape retention even by adding high melting point oils and fats, namely, high melting point triglycerides has been in demand.

Accordingly, the invention aims to provide fat-based confectionery good in mouth meltability and excellent in heat-resistant shape retention and to provide a process for producing the same.

**DISCLOSURE OF INVENTION**

Investigations have been assiduously conducted to solve the foregoing problems, and a process has been consequently found in which fat-based confectionery good in mouth meltability and excellent in heat-resistant shape retention are produced by adding to and mixing with a fat-based confectionery material high melting point triglycerides in an amount of 1.2 to 1.8% by weight based on the oil and fat content of the fat-based confectionery material, completely melting the mixture, then converting all of crystal forms of the high melting point triglycerides to crystal forms other than stable forms, and thereafter converting the crystal forms of the high melting point triglycerides to stable crystal forms. Further, fat-based confectionery produced by this process have been found in which a viscosity at 38°C is from 2,000 to 3,500 cP in non-tempered-type fat-based confectionery and from 5,000 to 9,000 cP in tempered-type fat-based confectionery and a heat-resistant shape retention is provided at from 35 to 42°C. These findings have led to the completion of the invention.

The fat-based confectionery is classified into two types, a non-tempered type and a tempered type depending on oils and fats used, for which two processes different in operation are provided.

That is, 1) from 1.2 to 1.8% by weight, based on the oil and fat content of a non-tempered-type fat-based confectionery material, of high melting point triglycerides is added to and mixed with the confectionery material. The mixture is once melted completely by heating at from 55 to 70°C, and poured into a mold. Alternatively, the mixture in a state coated on a center edible product is once cooled to from 25 to -20°C, preferably from 25 to 18°C to completely convert crystals of the high melting point triglycerides to unstable crystals (α-form) and/or metastable crystals (β'-form), namely-crystals other than stable crystals, whereby solidification of the whole fat-based confectionery proceeds. Subsequently, the whole fat-based confectionery are warmed at from 35 to 42°C while being filled in the mold or being coated on the center edible product to convert the crystals of the high melting point triglycerides to stable crystals (β-form). Then, the confectionery is re-cooled to 25°C or less, preferably from 25 to -20°C to solidify the whole confectionery, whereby the non-tempered-type fat-based confectionery are obtained.

2) From 1.2 to 1.8% by weight, based on the oil and fat content of a tempered-type fat-based confectionery material, of high melting point triglycerides is added to and mixed with the confectionery material. The mixture is once melted completely by heating at from 55 to 70°C, and cooled to from 25 to -20°C, preferably from 25 to 18°C to completely convert crystals of the high melting point triglycerides to unstable crystals (α-form) and/or metastable crystals (β'-form), namely crystals other than stable crystals and solidify the whole confectionery. Subsequently, the solidified fat-based confectionery are warmed at from 35 to 42°C to convert the crystals of the high melting point triglycerides to stable crystals (β-form). Then, the confectionery are cooled, and kept at from 30 to 33°C. Thereafter, a seed agent, for example, a crystalline powder of 1,3-distearoyl-2-oleoyl-sn-glycerol (hereinafter abbreviated as SOS), 1,3-diaralchinyl-2-oleoyl-sn-glycerol (hereinafter abbreviated as AOA), 1,3-dibehenoyl-2-oleoyl-sn-glycerol (hereinafter abbreviated as BOB) or the like is added to the mixture at a ratio of from 0.01 to 10.0% by weight based on the oil and fat content of the confectionery material, and the resulting mixture is then poured into a mold or coated on a center edible product. Subsequently, the fat-based confectionery are cooled at 25°C or less, preferably from 25 to -20°C while being filled in the mold or being coated on the center edible product to solidify the whole confectionery, whereby the tempered-type fat-based confectionery are obtained.

## BEST MODE FOR CARRYING OUT THE INVENTION

In the invention, the fat-based confectionery are chocolates such as a white chocolate, a milk chocolate and a dark chocolate, and they may contain a gas or be free of a gas. Composite fat-based confectionery laminated with biscuits or wafers are also available. The fat-based confectionery may be induded in snacks, or composite fat-based confectionery obtained by coating fat-based confectionery on crackers is also available.

The fat-based confectionery is usually classified into non-tempered-type fat-based confectionery and tempered-type fat-based confectionery depending on oils and fats used. Non-tempered-type oils and fats are oils and fats crystallized with a metastable form (β'-form) as a final form by simple cooling without the need of tempering. Examples thereof indude lauric oils such as coconut oil, low-melting-point fraction of sal butter (non-tempered-type oil obtained by fractionating sal butter according to a melting point), palm kernel oil and hydrogenated these oils. The fat-based confectionery using these oils and fats are called non-tempered-type fat-based confectionery. Further, the tempered-type oils and fats are oils and fats that require tempering and are therefore crystallized with a stable form (β-form). Examples thereof indude vegetable oils such as cacao butter, fractionated and purified oil of palm oil (unlike palm kernel oil, tempered-type oil obtained by fractionating palm oil according to a melting point and made mainly of palmitic acid or oleic acid glycerin ester, this is also called a medium-melting-point fractionated palm oil), sal butter and shea butter. Fat-based confectionery using these oils and fats are called tempered-type fat-based confectionery.

In the invention, the center edible product means an edible product to become a center. Examples of the edible product indude baked products such as bread, cakes, materialnuts, cream puffs, pies, waffles and sponge cakes, snacks such as biscuits, cookies, crackers, pretzels, flakes, wafers, puffs and potato chips, marshmallows, rice confectionery, Japanese confectionery, nuts, candies, jams, alcoholized mesocarp products, creams and the like.

As the high melting point triglycerides to be added, triglycerides obtained by esterifying long-chain saturated fatty acids having from 18 to 22 carbon atoms with glycerol are used. Examples of the long-chain saturated fatty acids having from 18 to 22 carbon atoms indude stearic acid having 18 carbon atoms (referred to as S), arachic acid having 20 carbon atoms (referred to as A) and behenic acid having 22 carbon atoms (referred to as B). One or more thereof are selected. For example, triglycerides such as SSS, SAA and SBB are listed. Specifically, fully hydrogenated rapeseed oil having a high content of behenic acid and containing 90% by weight of the high melting point triglycerides (hereinafter referred to as high behenic acid-type fully hydrogenated rapeseed oil) as manufactured by Asahi Denka Co., Ltd. and fully hydrogenated rapeseed oil (trade name TP9) having a high content of stearic acid (18 carbon atoms) and containing 80% by weight of the high melting point triglycerides (hereinafter referred to as high stearic acid-type fully hydrogenated rapeseed oil) as manufactured by NOF Corporation are listed as the high melting point triglycerides to be added.

The addition amount of the high melting point triglycerides is from 1.2 to 1.8% by weight based on the oil and fat content of the fat-based confectionery material. When it is less than 1.2% by weight, the shape retention is not obtained. When it exceeds 1.8% by weight, the mouth meltability is bad, and a waxy feel is provided. Thus, a mouth feel is bad.

The heat-resistant shape retention was evaluated by the following method. That is, the solidified fat-based confectionery was put into a thermostat of 38°C along with a plastic container, and kept for 60 minutes. Subsequently, the plastic container was inverted for being turned upside down within the thermostat of 38°C, and the extent of flowing-down of the fat-based confectionery by its own weight was observed to evaluate the heat-resistant shape retention. The evaluation criteria were as follows.

○: The fat-based confectionery does not flow down even by the inversion of the plastic container at 180°.

△: A part of the fat-based confectionery flows down by the inversion of the plastic container at 180°.

X: The whole fat-based confectionery flows down by the inversion of the plastic container at 180°.

That the heat-resistant shape retention is provided in the invention refers to a property that even when the solidified fat-based confectionery is put in the thermostat of 38°C along with the plastic container and kept for 60 minutes followed by inversion of the plastic container at 180°, the confectionery does not flow down.

Further, the viscosity was measured at 38°C using a vibration-type viscometer (CJV2001 manufactured by Chichibu Cement Co., Ltd., vibration frequency: 30 Hz).

The non-tempered-type fat-based confectionery in the invention has a viscosity at 38°C of from 2,000 to 3,500 cP. In the non-tempered type, when it is less than 2,000 cP, the heat-resistant shape retention is poor. When it exceeds 3,500 cP, the mouth feel is worsened. The tempered-type fat-based confectionery in the invention has a viscosity at 38°C of from 5,000 to 9,000 cP. In the tempered-type fat-based confectionery, when it is less than 5,000 cP, the heat-resistant shape retention is poor. When it exceeds 9,000 cP, the mouth feel is worsened.

The mouth meltability was evaluated as follows. The fat-based confectionery separated from the mold was eaten by 10 expert panelists of sensory evaluation. When at least 8 panelists evaluated in comparison to a control lot of not adding the high melting point triglycerides that "the mouth meltability remains almost unchanged in comparison to a control lot", this case was evaluated as ○ (mouth meltability is good). When at least 8 panelists evaluated that "the mouth meltability is bad in comparison to a control lot", this case was evaluated as X (mouth meltability is bad). The case other than the foregoing cases was evaluated as △ (mouth meltability is slightly bad).

Crystal forms (α-, β'- and β-forms) of crystals of high melting point triglycerides were generally identified using an X-ray diffractometer (XRD). In the X-ray diffractometry, in order to remove a diffraction peak attributable to crystalline particles of sugar or the like, an oily model was formed in which oils and fats of non-tempered-type fat-based confectionery were compounded according to the composition ratio thereof and high melting point triglycerides corresponding to the amount incorporated in the non-tempered-type fat-based confectionery were added thereto.

The melting points of polymorphic forms are identified by detecting crystal melting points with a thermal analyzer such as a differential scanning calorimeter (DSC)(reference document K. Larrson, Classification of Glyceride Crystal Forms, Acta Chem. Scand., 20, 2255-2260 (1966)).

In the invention, the crystallinity of the polymorphic forms is represented by the following formula.

$$\text{Crystallinity (\%)} = \frac{\text{Solid fat content of high melting point triglycerides}}{\text{Addition amount of high melting point triglycerides}} \times 100$$

The solid fat content of the high melting point triglycerides was measured using a low-resolution nudear magnetic resonance apparatus p-NMR (Minispeck PC120, manufactured by BRUKER).

The invention is illustrated more specifically by referring to Test Examples, Examples and the like. However, the invention is not limited to these Examples.

Test Example 1

15 parts by weight of a cocoa powder (cocoa butter 12% by weight), 35% by weight of a sugar powder, 14% by weight of lactose, 35.6% by weight of low-melting-point fraction of sal butter (melting point of low-melting-point fraction of sal butter - approximately 4°C) and 0.4% by weight of lecithin were mixed, and the mixture was pulverized with a refiner roll in a usual manner, and subjecting to conting to obtain a non-tempered-type fat-based confectionery material. The oil and fat content of the fat-based confectionery material is 37.8% by weight, and the oil and fat composition is 4.8% by weight of cocoa butter and 95.2% by weight of low-melting-point fraction of sal butter.

High melting point triglycerides derived from high behenic acid-type fully hydrogenated rapeseed oil (manufactured by Asahi Denka Co., Ltd.: containing 90% by weight of high melting point triglycerides) were added to and mixed with the non-tempered-type fat-based confectionery material previously melted at 70°C in an amount of 0% by weight (no addition), 0.45% by weight, 0.90% by weight, 1.35% by weight, 1.80% by weight or 3.60% by weight to completely homogenize the mixture. Subsequently, the material was cooled to 25°C by simple cooling, and 40 g of the material was poured into a cylindrical plastic container 60 mm in diameter. The material was moved along with the container to a cooling box through which cool air of 5°C was circulated to solidify the whole material.

Then, the solidified non-tempered-type fat-based confectionery was put into a thermostat of 38°C along with the plastic container, and kept for 60 minutes. Subsequently, the plastic container was inverted for being turned upside down within the thermostat of 38°C, and the extent of flowing-down of the fat-based confectionery by its own weight was observed to evaluate the heat-resistant shape retention.

High melting point triglycerides derived from high behenic acid-type fully hydrogenated rapeseed oil were added to and mixed with the non-tempered-type fat-based confectionery material previously melted at 70°C to completely homogenize the mixture. Then, 75 g of the material was poured into a glass cell for measuring a viscosity. Subsequently, the material was cooled to 25°C by simple cooling, further warmed to 38°C, and kept for 60 minutes. Thereafter, a viscosity value was measured using a vibration-type viscometer (CJV2001 manufactured by Chichibu Cement Co., Ltd., vibration frequency: 30 Hz).

Meanwhile, after the treatment was performed at 38°C for 60 minutes, the material was moved again to a cooling box through which cool air of 5°C was circulated to cool and solidify the material for 15 minutes. The resulting fat-based confectionery was eaten by 10 expert panelists of sensory evaluation to evaluate the mouth meltability.

As shown in Table 1, when the high melting point triglycerides were added in an amount of from 1.35 to 1.80% by weight based on the oil and fat content of the non-tempered-type fat-based confectionery material in case of adding and mixing the high behenic acid-type fully hydrogenated rapeseed oil, the fat-based confectionery which did not flow with the viscosity at 38°C of from 2,000 to 3,500 cP and had the excellent heat-resistant shape retention were obtained without impairing the inherent mouth feel.

Table 1:

| (Heat-resistant shape retention and mouth feel of non-tempered-type fat-based confectionery when adding and mixing high behenic acid-type fully hydrogenated rapeseed oil) | | | | | | |
|---|---|---|---|---|---|---|
| | Mixing amount (weight %) | | | | | |
| | No addition | 0.45% | 0.90% | 1.35% | 1.80% | 3.60% |
| Heat-resistant shape retention | X | X | Δ | ○ | ○ | ○ |
| Viscosity (cP) | 1000 | 1200 | 1400 | 2000 | 3500 | 20000 |
| Mouth feel | ○ | ○ | ○ | ○ | ○ | Δ |

Test Example 2

The non-tempered-type fat-based confectionery material used in Test Example 1 was previously melted at 55°C. High melting point triglycerides derived from high stearic acid-type fully hydrogenated rapeseed oil (trade name: TP9, manufactured by NOF Corporation, containing 80% by weight of high melting point triglycerides) were added to and mixed with the confectionery material in an amount of 0% by weight (no addition), 0.40% by weight, 0.80% by weight, 1.20% by weight, 1.60% by weight or 3.20% by weight based on the oil and fat content. The heat-resistant shape retention, the viscosity and the mouth feel were evaluated by the same methods as in Test Example 1.

As shown in Table 2, when the high melting point triglycerides derived from high-stearic acid fully hydrogenated rapeseed oil were added and mixed in an amount of from 1.20 to 1.60% by weight based on the oil and fat content of the non-tempered-type fat-based confectionery material, the fat-based confectionery which did not flow with the viscosity at 38°C of from 2,000 to 3,300 cP and had the excellent heat-resistant shape retention were obtained without impairing the inherent mouth feel.

Table 2:

| (Heat-resistant shape retention and mouth feel of non-tempered-type fat-based confectionery when adding and mixing high stearic acid-type fully hydrogenated rapeseed oil) | | | | | | |
|---|---|---|---|---|---|---|
| | Mixing amount (wt.%) | | | | | |
| | No addition | 0.40% | 0.80% | 1.20% | 1.60% | 3.20% |
| Heat-resistant shape retention | X | X | Δ | ○ | ○ | ○ |
| Viscosity (cP) | 1000 | 1200 | 1300 | 2000 | 3300 | 19000 |
| Mouth feel | ○ | ○ | ○ | ○ | ○ | Δ |

Test Example 3

The high melting point triglycerides derived from high behenic acid-type fully hydrogenated rapeseed oil as used in Test Example 1 were added to and mixed with the non-tempered-type fat-based confectionery material used in Test Example 1 in an amount of 1.8% by weight Separately, the high melting point triglycerides derived from high stearic acid-type fully hydrogenated rapeseed oil as used in Test Example 2 were added to and mixed with the same confectionery material in an amount of 1.6% by weight based on the oil and fat content. The respective mixtures were once melted completely at from 55 to 70°C. Then, each material was cooled to 18°C, 25°C, 30°C, 35°C or 38°C by simple cooling. Subsequently, 40 g of each material subjected to the simple cooling to each temperature was poured into a cylindrical plastic container 60 mm in diameter, and then put into a thermostat of 38°C along with the plastic container, and warmed in an atmosphere of 38°C for 60 minutes. Thereafter, the product was inverted at 180° in an atmosphere of 38°C along with the plastic container, and the heat-resistant shape retention was evaluated in the foregoing manner.

As shown in Table 3, a control lot (no addition) without adding and mixing the high melting point triglyoerides did not show the heat resistance at all. When the high melting point triglycerides derived from the high behenic acid-type fully hydrogenated rapeseed oil were added and mixed in an amount of 1.8% by weight and the high melting point triglycerides derived from the high stearic acid-type fully hydrogenated rapeseed oil were added and mixed in an amount of 1.6% by weight, the simple cooling temperature was found to be appropriately 25°C or less for providing the heat-resistant shape retention.

Table 3:

| (Simple cooling temperature and heat-resistant shape retention of the non-tempered-type fat-based confectionery material) | | | | | |
|---|---|---|---|---|---|
| | Simple cooling temperature | | | | |
| | 18°C | 25°C | 30°C | 35°C | 38°C |
| No addition lot (control lot) | X | X | X | X | X |
| 1.8% Addition lot (high behenic acid-type fully hydrogenated rapeseed oil) | ○ | ○ | Δ | X | X |
| 1.6% Addition lot (high stearic acid-type fully hydrogenated rapeseed oil) | ○ | ○ | X | X | X |

Test Example 4

High melting point triglycerides derived from high behenic acid-type fully hydrogenated rapeseed oil were added to and mixed with the same non-tempered-type fat-based confectionery material as used in Test Example 1 in an amount of 1.8% by weight based on the oil and fat content of the material. Separately, the high melting point triglycerides derived from high stearic acid-type fully hydrogenated rapeseed oil were added to and mixed with the same confectionery material in an amount of 1.6% by weight. The respective mixtures were heated at from 55 to 70°C to completely melt and homogenize them. Thereafter, the samples were cooled to 18°C by simple cooling. Approximately 40 g of each of the samples was poured into a plastic container, and kept in each thermostat of 35°C, 38°C, 42°C or 48°C for 60 minutes along with the plastic container. Then, the sample warmed and kept at each temperature was moved to a thermostat of 38°C, and further kept for 60 minutes. Subsequently, each of the samples was inverted at 180° within the thermostat of 38°C along with the plastic container, and the heat-resistant shape retention was evaluated in the foregoing manner.

As shown in Table 4-1, the heat-resistant shape retention was not shown at all in the control lot under any warming and keeping conditions. Meanwhile, when the high melting point triglycerides were added and mixed in an amount of from 1.6 to 1.8% by weight, the good heat-resistant shape retention was imparted by the warming treatment at from 35 to 42°C.

Table 4-1:

| (Heat-resistant shape retention at warming and keeping temperature) | | | | |
|---|---|---|---|---|
| Warming and keeping temperature | 35°C | 38°C | 42°C | 48°C |
| Control lot (no addition) | X | X | X | X |
| Addition of high behenic add type | ○ | ○ | ○ | X |
| Addition of high stearic acid type | ○ | ○ | ○ | X |

High melting point triglycerides derived from high behenic acid-type fully hydrogenated rapeseed oil were added to and mixed with the same non-tempered-type fat-based confectionery material as used in Test Example 1 in an amount of 1.8% by weight based on the oil and fat content of the material. Further, high melting point triglycerides derived from high stearic acid-type fully hydrogenated rapeseed oil were added to and mixed with the same confectionery material in an amount of 1.6% by weight. The respective mixtures were once heated at from 55 to 70°C to completely melt and homogenize them. Thereafter, the samples were cooled to 18°C by simple cooling. Approximately 40 g of each of the samples was poured into a plastic container, and kept in a thermostat of 38°C for 60 minutes along with the plastic container. Then, the samples warmed and kept at 38°C was moved to a thermostat of 35°C, 38°C, 42°C or 48°C, and further kept for 60 minutes. Subsequently, the sample was inverted at 180° within the thermostat of each temperature along with the plastic container, and the heat-resistant shape retention was evaluated in the foregoing manner.

As shown in Table 4-2, the heat-resistant shape retention was not shown at all in the control lot at any of the heat-resistant temperatures. Meanwhile, when the high melting point triglycerides were added and mixed in an amount of from 1.6 to 1.8% by weight, the good heat-resistant shape retention was imparted at the heat-resistant temperature of from 35 to 42°C.

Table 4-2:

| (Heat-resistant shape retention at heat-resistant temperature) | | | | |
|---|---|---|---|---|
| Heat-resistant temperature | 35°C | 38°C | 42°C | 48°C |
| Control lot (no addition) | X | X | X | X |
| Addition of high behenic acid type | ○ | ○ | ○ | X |
| Addition of high stearic acid type | ○ | ○ | ○ | X |

Test Example 5

An oily model A was prepared in which 2% by weight of high behenic acid-type fully hydrogenated rapeseed oil (namely, corresponding to 1.8% by weight of the total oil and fat content as high melting point triglycerides) was added to 4.7% by weight of cocoa butter and 93.3% by weight of low-melting-point fraction of sal butter. Separately, an oily model B was prepared in which 2% by weight of high stearic acid-type fully hydrogenated rapeseed oil (namely, corresponding to 1.6% by weight as high melting point triglycerides) was prepared. The samples of the oily models A and B were completely melted at from 55 to 70°C, and homogenized. Then, each of the samples was charged into a cell for X-ray diffractometry. Tempering water was circulated through a jacket of the cell. First, simple cooling was performed to 20°C at a rate of 10°C/min, and X-ray diffractometry was performed using XRD (X-ray diffractometer RAD-2C, manufactured by Rigaku Corporation, Cu-Kα; λ=1.54 A). Next, tempering water in the jacket was switched over to conduct warming to 38°C at a rate of 2°C/min. The sample was continuously kept at 38°C for 60 minutes, and the X-ray diffractometry was performed again at 38°C.

Meanwhile, thermal analysis of a tempering process in which approximately 1 mg of the sample of the oily model homogenized by incorporating the high melting point triglycerides was charged on an aluminum pan, completely melted at from 55 to 70°C, cooled to 20°C at a rate of 10°C/min, kept at 20°C for 20 minutes, then warmed to 38°C at a rate of 2°C/min, kept at 38°C for 60 minutes, further cooled to 5°C at a rate of 10°C/min and heated at from 55 to 70°C, was performed with a differential scanning calorimeter (SSC/5200, manufactured by Seiko Instruments Inc.).

A "d" value in the X-ray diffractometry is a lattice spacing value which characterizes a sub-cell structure of each crystal polymorphic form and is represented by a unit, angstrom (Å). d=4.2 is a characteristic value of α-form, d=4.1 and d=3.8 are characteristic values of β'-form, and d=4.6 is a characteristic value of β-form (reference document K. Larrson, Classification of Glyceride Crystal Forms, Acta Chem. Scand., 20, 2255-2260 (1966)).

The temperatures in the DSC measurement were shown in terms of melting points attributable to crystal polymorphic forms of high melting point triglycerides incorporated. "No peak" indicated that a measured value attributable to high melting point triglycerides was not detected.

As shown in Table 5, crystals were not formed at all by the tempering treatment in the control lot free of the high melting point triglycerides. Meanwhile, the samples containing 1.8% by weight of the high melting point triglycerides derived from the high behenic acid-type fully hydrogenated rapeseed oil and 1.6% by weight of the high melting point triglycerides derived from high stearic acid-type fully hydrogenated rapeseed oil provided two types of crystals by the simple cooling at 20°C, and the crystals belonged to α-form crystals and β'-form crystals according to the lattice spacing values (d values) of the X-ray diffraction. The melting points of the α-form crystals and the β'-form crystals were measured by the DSC measurement. In the high melting point triglycerides derived from the high behenic acid-type fully hydrogenated rapeseed oil, the melting point was 27°C in the α-form, and 35°C in the β'-form. Meanwhile, in the high melting point trigtycerides derived from the high stearic acid-type fully hydrogenated rapeseed oil, the melting point was 26°C in the α-form, and 29°C in the β'-form. Since the appearance of these α-form and β'-form crystals is not observed in case of no addition, the crystals are those of the high melting point triglycerides. In the same polymorphic forms, the melting points of the high melting point triglycerides derived from the high behenic acid-type fully hydrogenated rapeseed oil were higher than those of the high melting point triglycerides derived from the high stearic acid-type fully hydrogenated rapeseed oil, which presumably reflected the fact that the high melting point triglycerides containing behenic acid were contained in triglycerides constituting the high melting point triglycerides in large quantities.

Further, when the sample was kept at 38°C for 60 minutes after the simple cooling at 20°C, the crystals did not appeared at all in case of no addition. Meanwhile, in both of the high melting point triglycerides derived from the high behenic acid-type fully hydrogenated rapeseed oil and the high stearic acid-type fully hydrogenated rapeseed oil, the α-form and β'-form crystals formed by the simple cooling at 20°C disappeared, and the β-form crystals then appeared. The melting point of the β-form was 45°C in the high melting point triglycerides derived from the high behenic acid-type fully hydrogenated rapeseed oil and 43°C in the high melting point triglycerides derived from the high stearic acid-type fully hydrogenated rapeseed oil.

This presumably indicated that α-form and β'-form crystals were melted at 38°C by being warmed above the melting points of the α-form and β'-form crystals, while the β-form crystals of a stabler polymorphic form were formed by a mechanism of melt-mediated transformation (reference document: Structures and Dynamics of Lipids, Sato Kiyotaka and Kobayashi Masamichi, Kyoritsu Shuppan).

Table 5:

| (Identification of crystal polymorphic forms and melting points of crystals formed by tempering treatment of non-tempered oil-containing models through XRD and DSC) | | | | | | | | |
|---|---|---|---|---|---|---|---|---|
| Mixing mount of high melting point triglycerides | Tempering conditions | | | | | | | |
| | 20°C (simple cooling) | | | | 38°C (keeping for 60 minutes) | | | |
| | XRD | | DSC | | XRD | | DSC | |
| | d(Å) | Attnbutable polymorphic form | Found (°C) | Attributable polymorphic form | d(Å) | Attributable polymorphic form | Found (°C) | Attributable polymorphic form |
| No addition (control lot) | no peak | - | no peak | - | no peak | - | no peak | - |
| 1.8% Addition lot (derived from high behenic acid-type fully hydrogenated rapeseed oil) | 4.2 | α | 27 | α | 4.6 | β | 45 | β |
| | 3.8, 4.1 | β' | 35 | β' | | | | |
| 1.6% Addition lot (derived from high stearic acid-type fully hydrogenated rapeseed oil) | 4.2 | α | 26 | α | 4.6 | β | 43 | β |
| | 3.8, 4.1 | β' | 29 | β' | | | | |

Test Example 6

High melting point triglycerides derived from high behenic acid-type fully hydrogenated rapeseed oil were added to and mixed with the same non-tempered-type fat-based confectionery material as used in Test Example 1 in an amount of 1.8% by weight. Further, high melting point triglycerides derived from high stearic acid-type fully hydrogenated rapeseed oil were added to and mixed with the same material in an amount of 1.6% by weight. DSC analysis on formation of crystals by the tempering point and on the crystals was performed in the same manner as in Test Example 5. Consequently, as shown in Table 6, no endothermic peak due to melting of crystals was observed at all by the simple cooling at 20°C and the warming treatment at 38°C in case of no addition as in the oily models.

Meanwhile, in the high melting point triglycerides derived from the high behenic acid-type fully hydrogenated rapeseed oil, two endothermic peaks were observed at 27°C and 35°C by the simple cooling at 20°C. These were attributable to α-form crystals and β'-form crystals in comparison to the results in Table 5. Further, also in the high melting point triglycerides derived from the high stearic acid-type fully hydrogenated rapeseed oil, two endothermic peaks were observed at 26°C and 29°C by the simple cooling at 20°C. The respective endothermic peaks were presumably attributable to α-form crystals and β'-form crystals in comparison to the results in Table 5. Successively, the samples were warmed at 38°C, and kept for 60 minutes. Then, the DSC analysis was performed. As a result, an endothermic peak was observed at 45°C in the high melting point triglycerides derived from the high behenic acid-type fully hydrogenated rapeseed oil, and an endothermic peak was observed at 43°C in the high melting point triglycerides derived from the high stearic acid-type fully hydrogenated rapeseed oil. These endothermic peaks were presumably attributable to β-form crystals thereof as shown in Table 5.

These results suggest that the β-form crystals of the high melting point triglycerides compounded in the tempering treatment were formed to impart the heat-resistant shape retention to the non-tempered-type fat-based confectionery.

Table 6:

| (Identification of crystal polymorphic forms of high melting point triglycerides in non-tempered-type fat-based confectionery material itself by DSC measurement) | | | | |
|---|---|---|---|---|
| Mixing amount of high melting point triglycerides | Tempering conditions | | | |
| | 20°C (simple cooling) | | 38°C (keeping for 60 minutes) | |
| | DSC | | DSC | |
| | Found (°C) | Attributable polymorphic form | Found (°C) | Attributable polymorphic form |
| No addition (control lot) | no peak | - | no peak | - |
| 1.8% Addition lot (derived from high behenic acid-type fully hydrogenated rapeseed oil) | 27 | α | 45 | β |
| | 35 | β' | | |
| 1.6% Addition lot (derived from high stearic acid-type fully hydrogenated rapeseed oil) | 26 | α | 43 | β |
| | 29 | β' | | |

Test Example 7

19% by weight of cacao mass, 35% by weight of a sugar powder, 7.5% by weight of cocoa butter, 29% by weight of fractionated and purified oil of palm oil, 9% by weight of a whole milk powder and 0.5% by weight of lecithin were mixed. The mixture was pulverized with a refiner roll in a usual manner, and subjected to conting to obtain a tempered-type fat-based confectionery material. The oil and fat content of the fat-based confectionery material is 50% by weight.

To the tempered-type fat-based confectionery material previously melted at from 55 to 70°C was added high behenic acid-type fully hydrogenated rapeseed oil (manufactured by Asahi Denka Co., Ltd.) in an amount of 0% by weight (no addition), 0.45% by weight, 0.90% by weight, 1.35% by weight, 1.80% by weight or 3.60% by weight based on the oil and fat content (the addition amount of high melting point triglycerides is calculated in the same manner as in the non-tempered- type fat-based confectionery material) or high stearic acid-type fully hydrogenated rapeseed oil (manufactured by NOF Corporation: trade name TP9) in an amount of 0% by weight (no addition), 0.40% by weight, 0.80% by weight, 1.20% by weight, 1.60% by weight or 3.20% by weight based on the oil and fat content of the tempered-type fat-based confectionery material to completely homogenize the mixture. Thereafter, the material was cooled to 25°C to form unstable crystals (α-form) and/or metastable crystals (β'-form) of the high melting point triglycerides in the fat-based confectionery material by approximately 100%. Subsequently, the whole fat-based confectionery material was warmed in an atmosphere of 38°C for 60 minutes to convert the crystals of the high melting point triglycerides in the material to the stable crystals (β-form). Then, the material was subjected to simple cooling, and kept at from 30 to 33°C. A BOB crystalline powder in an amount of 1 % by weight based on the oil and fat content of the material was mixed and dispersed as seed crystals for solidifying the material with fat bloom-free stable crystals. 40 g of the resulting material was poured into a cylindrical plastic container 60 mm in diameter, and moved along with the container to a cooling box through which cool air of 5°C was circulated to solidify the whole material.

Subsequently, each of the solidified tempered-type fat-based confectionery was put into a thermostat of 38°C along with the plastic container, and kept for 60 minutes. Thereafter, the plastic container was inverted within the thermostat of 38°C for being turned upside down, and the extent of flowing-down of the fat-based confectionery by its own weight was observed to evaluate the heat-resistant shape retention.

Meanwhile, after the treatment was performed at 38°C for 60 minutes, the fat-based confectionery were moved again to the cooling box through which cool air of 5°C was circulated, and cooled and solidified for 15 minutes. The resulting fat-based confectionery was eaten by 10 expert panelists of sensory evaluation to evaluate the mouth meltability. The results were shown in Tables 7 and 8.

Table 7:

| (Heat-resistant shape retention and mouth feel of tempered-type fat-based confectionery when adding and mixing high behenic acid-type fully hydrogenated rapeseed oil) | | | | | | |
|---|---|---|---|---|---|---|
| | Mixing amount of high melting point triglycerides (weight %) | | | | | |
| | No addition | 0.45% | 0.90% | 1.35% | 1.80% | 3.60% |
| Heat-resistant shape retention | X | X | Δ | ○ | ○ | ○ |
| Viscosity (cP) | 1250 | 1500 | 4000 | 6000 | 9000 | 10000 |
| Mouth feel | ○ | ○ | ○ | ○ | ○ | Δ |

Table 8:

| (Heat-resistant shape retention and mouth feel of tempered-type fat-based confectionery when adding and mixing high stearic acid-type fully hydrogenated rapeseed oil) | | | | | | |
|---|---|---|---|---|---|---|
| | Mixing amount of high melting point triglycerides (weight %) | | | | | |
| | No addition | 0.45% | 0.80% | 1.20% | 1.60% | 3.20% |
| Heat-resistant shape retention | X | X | Δ | ○ | ○ | ○ |
| Viscosity (cP) | 1250 | 1350 | 3000 | 5000 | 8000 | 90000 |
| Mouth feel | ○ | ○ | ○ | ○ | ○ | Δ |

It was shown that when the tempered-type fat-based confectionery material was subjected to simple cooling to 25°C, kept at 38°C for 60 minutes, further subjected to simple cooling, kept at from 30 to 33°C and mixed with BOB, the fat-based confectionery excellent in heat-resistant shape retention with no deformation even at 38°C were obtained without impairing the inherent mouth feel in case of adding and mixing from 1.2 to 1.8% by weight, based on the oil and fat content of the tempered-type fat-based confectionery material, of the high melting point triglycerides to and with the confectionery material as shown in Tables 7 and 8.

Test Example 8

High melting point triglycerides derived from high behenic acid-type fully hydrogenated rapeseed oil were added to and mixed with the same tempered-type fat-based confectionery material as in Test Example 7 in an amount of 1.8% by weight based on the oil and fat content of the confectionery material. Further, high melting point triglycerides derived from high stearic acid-type fully hydrogenated rapeseed oil were added to and mixed with the same confectionery material in an amount of 1.6% by weight. The respective mixtures were once melted completely at from 55 to 70°C. Subsequently, each material was cooled to 18°C, 25°C, 30°C, 35°C or 38°C by simple cooling. The material of each temperature was warmed at 38°C for 60 minutes. The whole material was then cooled to from 30 to 33°C, and 1% by weight of a BOB crystalline powder was mixed with and dispersed in the material. 40g of each material was poured into a cylindrical plastic container 60 mm in diameter, and the whole material was solidified along with the container under cool air of 5°C. Thereafter, the product was moved to a thermostat of 38°C along with the plastic container, kept for 60 minutes, inverted at 180° within the thermostat of 38°C along with the plastic container to evaluate the heat-resistant shape retention in the same manner as described in the non-tempered-type fat-based confectionery.

Consequently, as shown in Table 9, in a control lot (no addition) in which the high melting point triglycerides were not added and mixed, the heat-resistant shape retention was not shown at all. In both cases of adding 1.8% by weight of the high melting point triglycerides derived from the high behenic add-type fully hydrogenated rapeseed oil and of adding 1.6% by weight of the high melting point triglycerides derived from the high stearic acid-type fully hydrogenated rapeseed oil, it was shown that the appropriate simple cooling temperature was 25°C or less for providing the heat-resistant shape retention.

Table 9:

| (Simple cooling temperature condition and heat-resistant shape retention of non-tempered-type fat-based confectionery material) | | | | | |
|---|---|---|---|---|---|
| Mixing amount of high melting point triglycerides (wt.%) | Simple cooling temperature and heat-resistant shape retention | | | | |
| | 18°C | 25°C | 30°C | 35°C | 38°C |
| No addition (control lot) | X | X | X | X | X |
| 1.8% Addition lot (high behenic acid-type fully hydrogenated oil) | ○ | ○ | △ | △ | △ |
| 1.6% Addition lot (high stearic acid-type fully hydrogenated oil) | ○ | ○ | ○ | X | X |

Test Example 9

High melting point triglycerides derived from high behenic acid-type fully hydrogenated rapeseed oil were added to and mixed with the same tempered-type fat-based confectionery material as in Test Example 7 in an amount of 1.8% by weight based on the oil and fat content of the material. High melting point triglycerides derived from high stearic acid-type fully hydrogenated rapeseed oil were added to and mixed with the same confectionery material in an amount of 1.6% by weight. The respective mixtures were completely melted by heating at from 55 to 70°C to homogenize the same. Subsequently, the respective samples were cooled to 25°C by simple cooling. Each material was then kept at 35°C, 38°C, 42°C or 48°C for 60 minutes. Thereafter, the whole material was cooled to from 30 to 33°C, and 1% by weight, based on the oil and fat content of the material, of a BOB crystalline powder was mixed and dispersed. 40 g of the resulting material was poured into a cylindrical plastic container 60 mm in diameter, and the whole material was solidified under cool air of 5°C along with the container. Then, the product was moved to a thermostat of 38°C along with the plastic container, kept for 60 minutes, and inverted at 180° within the thermostat of 38°C along with the plastic container to evaluate the heat-resistant shape retention by the same evaluation method as described in the non-tempered-type fat-based confectionery.

The extent of bloom on the outer surface and the inside of each fat-based confectionery obtained by treatment at each temperature and solidification at 5°C was visually evaluated: + (plus) indicates that bloom was observed, and - (minus) indicates that bloom was not observed.

Consequently, as shown in Table 10-1, a control lot did not show the heat-resistant shape retention at all under any worming conditions. Meanwhile, when the high melting point triglycerides were properly mixed, the tempered-type fat-based confectionery having the heat-resistant shape retention and the bloom resistance were obtained by the warming treatment at from 35 to 42°C.

Table 10-1:

| (Influence of warming and keeping temperature on heat-resistant shape retention and bloom) | | | | | | | | |
|---|---|---|---|---|---|---|---|---|
| | Warming and keeping temperature (°C) | | | | | | | |
| | 35 | | 38 | | 42 | | 48 | |
| | Heat-resistant shape retention | Bloom | Heat-resistant shape retention | Bloom | Heat-resistant shape retention | Bloom | Heat-resistant shape retention | Bloom |
| Control lot (no addition) | X | - | X | - | X | - | X | + |
| Addition of high behenic acid type | ○ | - | ○ | - | ○ | - | X | + |
| Addition of high stearic acid type | ○ | - | ○ | - | ○ | - | X | + |

Further, the product was inverted at 180° along with the plastic container within the thermostat in which the warming and keeping temperature was set at 38°C and the test temperature of the heat-resistant shape retention was kept at 35°C, 38°C, 42°C or 48°C for 60 minutes to evaluate the heat-resistant shape retention and the bloom.

Consequently, as shown in Table 10-2, a control lot did not show the heat-resistant shape retention at all under any worming conditions. Meanwhile, when the high melting point triglycerides were properly mixed, the tempered-type fat-based confectionery having the heat-resistant shape retention and the bloom resistance were obtained at the heat-resistant temperature of from 35 to 42°C.

Table 10-2:

| (Influence of heat-resistant temperature on heat-resistant shape retention and bloom) | | | | | | | | |
|---|---|---|---|---|---|---|---|---|
| | Warming and keeping temperature (°C) | | | | | | | |
| | 35 | | 38 | | 42 | | 48 | |
| | Heat-resistant shape retention | Bloom | Heat-resistant shape retention | Bloom | Heat-resistant shape retention | Bloom | Heat resbtant shape retention | Bloom |
| Control lot (no addition) | X | - | X | - | X | - | X | + |
| Addition of high behenic acid type | ○ | - | ○ | - | ○ | - | X | + |
| Addition of high stearic acid type | ○ | - | ○ | - | ○ | - | X | + |

Test Example 10

Oily models A and B were prepared such that 2 % by weight of high behenic acid-type fully hydrogenated rapeseed oil (namely, corresponding to 1.8% by weight as a mixing amount of high melting point triglycerides) was added to 37.6% by weight of cocoa butter and 60.4% by weight of fractionated and purified oil of palm oil and separately 2% by weight of high stearic acid-type fully hydrogenated rapeseed oil (namely, corresponding to 1.6% by weight as a mixing amount of high melting point triglycerides) was added thereto. The change in crystal form during the tempering treatment and the melting point of the thus-prepared models A and B were measured by XRD and DSC. The measurements were performed by the same analysis apparatus and methods as used in the non-tempered-type fat-based confectionery.

As shown in Table 11, in a control lot free of the high melting point triglycerides, crystals were not formed at all by the tempering treatment

Meanwhile, in the samples containing 1.8% by weight of the high melting point triglycerides derived from the high behenic acid-type fully hydrogenated rapeseed oil and 1.6% by weight of the high melting point triglycerides derived from the high stearic acid-type fully hydrogenated rapeseed oil, two types of crystals were formed by the simple cooling at 20°C, and the crystals belonged to α-form crystals and β'-form crystals which were determined from lattice spacing values (d values) of the X-ray diffraction. Incidentally, the melting point, as measured by DSC, was 27°C in the α-form crystals, and was 35°C in the β'-form crystals in the high melting point triglycerides derived from the high behenic acid-type fully hydrogenated rapeseed oil, while it was 26°C in the α-form, and was 29°C in the β'-form in the high melting point triglycerides derived from the high stearic acid-type fully hydrogenated rapeseed oil. Since the appearance of these α-form and β'-form crystals is not observed in case of no addition, the crystals are the crystals of the high melting point triglycerides incorporated.

Moreover, when the product was subjected to the simple cooling at 20°C and then kept at 38°C for 60 minutes, the crystals did not appear at all in case of no addition. Meanwhile, in both of the high melting point triglycerides derived from the high behenic acid-type fully hydrogenated rapeseed oil and the high stearic acid-type fully hydrogenated rapeseed oil, the α-form and β'-form crystals formed by the simple cooling at 20°C disappeared, and the β-form crystals then appeared. The melting point of β-form was 45°C in the high melting point triglycerides derived from the high behenic acid-type fully hydrogenated rapeseed oil and 43°C in the high melting point triglycerides derived from the high stearic acid-type fully hydrogenated rapeseed oil. This was presumably because, as in the non-tempered-type fat-based confectionery models, the α-form and β'-form crystals were melted by being heated above the melting points of the α-form and β'-form crystals and transferred to stabler polymorphic β-form crystals by the mechanism of melt-mediated transformation.

Table 11:

| (Identification of crystal polymorphic forms and melting points of crystals formed by tempering treatment of tempered oil-containing models through XRD and DSC) | | | | | | | | |
|---|---|---|---|---|---|---|---|---|
| Mixing amount of high melting point triglycerides | Tempering conditions | | | | | | | |
| | 20°C (simple cooling) | | | | 38°C (keeping for 60 minutes) | | | |
| | XRD | | DSC | | XRD | | DSC | |
| | d(Å) | Attributable polymorphic form | Found (°C) | Attributable polymorphic form | d(Å) | Attributable polymorphic form | Found (°C) | Attributable polymorphic form |
| No addition (control lot) | no peak | - | no peak | - | no peak | - | no peak | - |
| 1.8% Addition lot (derived from high behenic acid-type fully hydrogenated rapeseed oil) | 4.2 | α | 27 | α | 4.6 | β | 45 | β |
| | 3.8, 4.1 | β' | 35 | β' | | | | |
| 1.6% Addition lot (derived from high stearic acid-type fully hydrogenated rapeseed-oil) | 4.2 | α | 26 | α | 4.6 | β | 43 | β |
| | 3.8, 4.1 | β' | 29 | β' | | | | |

High melting point triglycerides derived from high behenic acid-type fully hydrogenated rapeseed oil were added to and mixed with the same tempered-type fat-based confectionery material as in Test Example 7 in an amount of 1.8% by weight based on the oil and fat content of the material. High melting point triglycerides derived from high stearic acid-type fully hydrogenated rapeseed oil were added to and mixed with the same confectionery material in an amount of 1.6% by weight. Each of the mixtures was tempered by the method described in Test Example 5. DSC analysis on formation of crystals and melting points was performed in the same manner as in Test Example 5 to estimate polymorphic forms to which the crystals belonged in comparison to the foregoing oily models.

As shown in Table 12, no endothermic peak due to melting of crystals was observed at all by the simple cooling at 20°C and the warming treatment at 38°C in case of no addition as in the oily models.

Meanwhile, in the high melting point triglycerides derived from the high behenic acid-type fully hydrogenated rapeseed oil, two endothermic peaks were observed at 27°C and approximately 35°C by the simple cooling at 20°C. These endothermic peaks were presumably attributable to α-form crystals and β'-form crystals respectively in comparison to the results in Table 11. Likewise in the high melting point triglycerides derived from the high stearic acid-type fully hydrogenated rapeseed oil, two endothermic peaks were observed at 26°C and 29°C by the simple cooling at 20°C. These were also presumably attributable to α-form crystals and β'-form crystals respectively in comparison to the results in Table 11.

Successively, the samples were warmed at 38°C, and kept for 60 minutes. Then, the DSC analysis was performed. As a result, an endothermic peak was observed at 45°C in the high melting point triglycerides derived from the high behenic acid-type fully hydrogenated rapeseed oil, and an endothermic peak was observed at 43°C also in the high melting point triglycerides derived from the high stearic acid-type fully hydrogenated rapeseed oil. These endothermic peaks were presumably attributable to β-form crystals thereof in comparison to the results in Table 11.

These results strongly suggest that the β-form crystals of the high melting point triglycerides incorporated in the tempering treatment were formed to impart the heat-resistant shape retention to the tempered-type fat-based confectionery.

Table 12:

| (Identification of crystal polymorphic forms of high melting point triglycerides in tempered-type fat-based confectionery material itself by DSC measurement) | | | | |
|---|---|---|---|---|
| Mixing amount of high melting point triglycerides | Tempering conditions | | | |
| | 20°C (simple cooling) | | 38°C (keeping for 60 minutes) | |
| | DSC | | DSC | |
| | Found (°C) | Attributable polymorphic form | Found (°C) | Attributable polymorphic form |
| No addition (control lot) | no peak | - | no peak | - |
| 1.8% Addition lot (derived from high behenic acid-type fully hydrogenated rapeseed oil) | 27 | α | 45 | β |
| | 35 | β' | | |
| 1.6% Addition lot (derived from high stearic acid-type fully hydrogenated rapeseed oil) | 26 | α | 43 | β |
| | 29 | β' | | |

Test Example 11

The non-tempered-type fat-based confectionery material same as used in Test Example 1 was melted at from 55 to 70°C. 1.8% by weight of high melting point triglycerides derived from high behenic acid-type fully hydrogenated rapeseed oil was added to this material, or 1.6% by weight of high melting point triglycerides derived from high stearic acid-type fully hydrogenated rapeseed oil was added to the same material to homogenize the mixture. Thereafter, 2g of each sample was filled in a cylindrical glass cell 7mm in diameter. The glass cell was then subjected to simple cooling in a thermostat set at 18°C or 25°C at a rate of 10°C/min, and kept at 18°C or 25°C for 5 minutes. Crystallinity of each polymorphic form was measured using a low-resolution nudear magnetic resonance apparatus p-NMR (PC120, manufactured by BRUKER). The crystallinity was calculated by the following formula.

$$\text{Crystallinity (\%)} = \frac{\text{Solid fat content of high melting point triglycerides}}{\text{Addition amount of high melting point triglycerides}} \times 100$$

Further, the solid fat content was measured on the basis of a difference in relaxing time of magnetic pulse between a liquid fat and a solid fat. Consequently, in both cases of adding to the non-tempered-type fat-based confectionery material 1.8% by weight of the high melting point triglycerides derived from the high behenic acid-type fully hydrogenated rapeseed oil and of adding 1.6% by weight of the high melting point triglycerides derived from the high stearic acid-type fully hydrogenated rapeseed oil, the crystallinity of 100% was provided at 18°C and 25°C. Accordingly, considering the results of the identification of the crystal polymorphic forms listed in Table 6 of Test Example 6, the unstable crystals (α-form) and/or the metastable crystals (β'-form) of the high melting point triglycerides in the fat-based confectionery material were found to be all subjected to crystallization at 18°C and 25°C.

Test Example 12

The non-tempered-type fat-based confectionery material same as that used in Test Example 7 was melted at from 55 to 70°C. To this material was added 1.8% by weight of high melting point triglycerides derived from high behenic acid-type fully hydrogenated rapeseed oil or 1.6% by weight of high melting point triglycerides derived from high stearic acid-type fully hydrogenated rapeseed oil. According to the same method as in Test Example 11, each of the mixtures was kept at 18°C or 25°C for 5 minutes, and a crystallinity of unstable crystals (α-form) and/or metastable crystals (β'-form) of the high melting point triglycerides in the fat-based confectionery material was measured using a low-resolution nuclear magnetic resonance apparatus p-NMR (PC120, manufactured by BRUKER). Consequently, the crystallinity of unstable crystals- (α-form) and/or metastable crystals (β'-form) of the high melting point triglycerides in the tempered-type fat-based confectionery material was 100% at 18°C or 25°C as in the non-tempered-type fat-based confectionery material. Accordingly, considering the results of the identification of the crystal polymorphic forms listed in Table 11 of Test Example 10, the unstable crystals (α-form) and/or the metastable crystals (β'-form) of the high melting point triglycerides in the fat-based confectionery material were found to be all subjected to crystallization at 18°C and 25°C.

Example 1

High melting point triglycerides derived from high behenic acid-type fully hydrogenated rapeseed oil (manufactured by Asahi Denka Co., Ltd.) were added to and mixed with a non-tempered-type fat-based confectionery material with the oil and fat content of 37.8% by weight containing 15% by weight of cocoa powder (cocoa butter 12% by weight), 35% by weight of a sugar powder, 14% by weight of lactose, 35.6% by weight of low-melting-point fraction of sal butter (melting point of low-melting-point fraction of sal butter approximately 4°C) and 0.4% by weight of lecithin in an amount of 1.8% by weight based on the oil and fat content of the material. The mixture was once melted completely by heating at 70°C. Subsequently, the mixture was cooled to 25°C, and allowed to stand for 5 minutes. This cooling allows formation of the high melting point triglycerides in the fat-based confectionery material as unstable crystals (α-form) and/or metastable crystals (β'-form) by 100%. Successively, 40 g of the material was poured into a cylindrical plastic container 60 mm in diameter, and the fat-based confectionery material was then warmed in an atmosphere of 38°C for 60 minutes to convert the crystal form of all the high melting point triglycerides incorporated to the stable form (β-form). The fat-based confectionery material was cooled in a cooling box through which cool air of 5°C was circulated for solidification to obtain a non-tempered-type fat-based confectionery having a viscosity of 3,500 cR The solidified fat-based confectionery was excellent in heat-resistant shape retention at 38°C and good in mouth feel.

Example 2

High melting point triglycerides derived from high stearic acid-type fully hydrogenated rapeseed oil (trade name TP9: manufactured by NOF Corporation) were added to and mixed with the non-tempered-type fat-based confectionery material described in Example 1 in an amount of 1.6% by weight based on the oil and fat content of the material. The mixture was once melted completely by heating at 55°C. Subsequently, the mixture was cooled to 18°C, and allowed to stand for 5 minutes. This cooling allows formation of the high melting point triglycerides in the fat-based confectionery material as unstable crystals (α-form) and/or metastable crystals (β'-form) by 100%. Successively, 40 g of the material was poured into a cylindrical plastic container 60 mm in diameter, and the fat-based confectionery material was then warmed in an atmosphere of 38°C for 60 minutes to convert the crystal form of all the high melting point triglycerides to the stable form (β-form). The fat-based confectionery material was cooled in a cooling box through which cool air of 5°C was circulated for solidification to obtain a non-tempered-type fat-based confectionery having a viscosity of 3,300 cP. The solidified fat-based confectionery was excellent in heat-resistant shape retention at 38°C and good in mouth feel.

Example 3

High melting point triglycerides derived from high behenic acid-type fully hydrogenated rapeseed oil (manufactured by Asahi Denka Co., Ltd.) were added to and mixed with a tempered-type fat-based confectionery material with the oil and fat content of 50% by weight containing 19.0% by weight of cacao mass, 35.0% by weight of a sugar powder, 7.5% by weight of cocoa butter, 29% by weight of fractionated and purified oil of palm oil, 9.0% by weight of a whole milk powder and 0.5% by weight of lecithin in an amount of 1.8% by weight based on the oil and fat content of the confectionery material. The mixture was once melted completely by heating at 70°C. Subsequently, the material was cooled to 25°C, and allowed to stand for 5 minutes. This cooling allows formation of unstable crystals ($\alpha$-form) and/or metastable crystals ($\beta$'-form) of the high melting point triglycerides in the fat-based confectionery material by approximately 100%. The whole fat-based confectionery material was then warmed in an atmosphere of 38°C for 60 minutes to form the high melting point triglycerides of the material as stable crystals ($\beta$-form). Thereafter, the whole material was cooled, and kept at from 30 to 33°c. A BOB crystalline powder was mixed and dispersed in an amount of 1% by weight based on the oil and fat content of the fat-based confectionery material. 40 g of the mixture was poured into a cylindrical plastic container 60 mm in diameter, and moved to a cooling box through which cool air of 5°C was circulated along with the container to solidify the whole product to obtain a tempered-type fat-based confectionery having a viscosity of 9,000 cP. The solidified-fat-based confectionery was excellent in heat-resistant shape retention at 38°C and good in mouth feel.

Example 4

High melting point triglycerides derived from high stearic acid-type fully hydrogenated rapeseed oil (trade name TP9: manufactured by NOF Corporation) were added to and mixed with the tempered-type fat-based confectionery material same as that in Example 3 in an amount of 1.6% by weight based on the oil and fat content of the confectionery material. The mixture was once melted completely by heating at 55°C. Subsequently, the material was cooled to 18°C, and allowed to stand for 5 minutes. This cooling allows formation of unstable crystals ($\alpha$-form) and/or metastable crystals ($\beta$'-form) in the fat-based confectionery material by approximately 100%. The whole fat-based confectionery material was then warmed in an atmosphere of 38°C for 60 minutes to form the high melting point triglycerides of the material as stable crystals ($\beta$-form). Thereafter, the whole material was cooled, and kept at from 30 to 33°c. A BOB crystalline powder was mixed and dispersed in an amount of 1% by weight based on the oil and fat content of the fat-based confectionery material. 40 g of this mixture was poured into a cylindrical plastic container 60 mm in diameter, and moved to a cooling box through which cool air of 5°C was circulated along with the container to solidify the whole product to obtain a tempered-type fat-based confectionery having a viscosity of 8,000 cR The solidified fat-based confectionery was excellent in heat-resistant shape retention at 38°C and good in mouth feel.

**INDUSTRIAL APPLICABILITY**

The invention can provide fat-based confectionery excellent in heat-resistant shape retention without impairing the inherent mouth feel by controlling crystal polymorphic forms of high melting point triglycerides in oils and fats of a fat-based confectionery material through a simple tempering treatment.

**Claims**

1. A process for producing a fat-based confectionery **characterized by** comprising a step of adding to and mixing with a fat-based confectionery material high melting point triglycerides in an amount of 1.2 to 1.8% by weight based on the oil and fat content of the fat-based confectionery material, a heating step of completely melting the mixture by heating, a cooling step of, after the heating step, cooling the mixture to convert all of crystal forms of the high melting point triglycerides to crystal forms other than stable forms, and a warming step of, after the cooling step, warming the whole fat-based confectionery to completely convert the crystals of the high melting point triglycerides to $\beta$-form crystals, namely stable crystals.

2. A process for producing the fat-based confectionery according to daim 1, wherein in the heating step, the mixture is heated at from 55 to 70°C.

3. A process for producing the fat-based confectionery according to daim 1, wherein in the cooling step, the mixture is cooled to from 25 to -20°C.

4.  A process for producing the fat-based confectionery according to daim 1, wherein in the warming step, the whole fat-based confectionery is warmed at from 35 to 42°C.

5.  A process for producing the fat-based confectionery according to daim 1, wherein the high melting point triglycerides are esters of one or more long-chain fatty acids selected from stearic acid and behenic acid and glycerol.

6.  A process for producing the fat-based confectionery according to any one of daims 1 to 5, wherein the fat-based confectionery is a non-tempered-type fat-based confectionery.

7.  A process for producing the fat-based confectionery according to any one of claims 1 to 5, wherein the fat-based confectionery is a tempered-type fat-based confectionery.

8.  A non-tempered-type fat-based confectionery which is produced by the process according to any one of daims 1 to 5.

9.  A tempered-type fat-based confectionery which is produced by the process according to any one of daims 1 to 5.

## INTERNATIONAL SEARCH REPORT

| | International application No. |
|---|---|
| | PCT/JP03/00481 |

A. CLASSIFICATION OF SUBJECT MATTER
Int.Cl⁷ A23G1/00, A23G3/00

According to International Patent Classification (IPC) or to both national classification and IPC

B. FIELDS SEARCHED

Minimum documentation searched (classification system followed by classification symbols)
Int.Cl⁷ A23G1/00, A23G3/00

Documentation searched other than minimum documentation to the extent that such documents are included in the fields searched

Electronic data base consulted during the international search (name of data base and, where practicable, search terms used)
WPI(DIALOG)

C. DOCUMENTS CONSIDERED TO BE RELEVANT

| Category* | Citation of document, with indication, where appropriate, of the relevant passages | Relevant to claim No. |
|---|---|---|
| Y | US 5279846 A (Asahi Denka Kogyo Kabushiki Kaisha), 18 January, 1994 (18.01.94), & JP 2-286041 A | 1-9 |
| Y | JP 10-165100 A (Fuji Oil Co., Ltd.), 23 June, 1998 (23.06.98), (Family: none) | 1-9 |
| Y | JP 2001-321081 A (Kaneka Corp.), 20 November, 2001 (20.11.01), (Family: none) | 1-9 |
| A | Nagao WATANABE et al., Seika Jiten, Kabushiki Kaisha Asakura Shoten, 30 October, 1981 (30.10.81), pages 458 to 461 | 1-9 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 February, 2003 (10.02.03) | 25 February, 2003 (25.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)